# DEMANDE DE BREVET EUROPEEN

(11) **EP 1 130 900 A1**
(43) Date de publication de la demande: **05.09.2001**
(21) Numéro de dépôt: 01200600.3
(22) Date de dépôt: 20.02.2001
(51) Int. Cl.: H04N 3/32

(54) **Affichage d'un signal vidéo au moyen d'un balayage en lignes**

(30) Priorité: 29.02.2000 FR 0002557
(71) Demandeur: Koninklijke Philips Electronics N.V., 5621 BA Eindhoven (NL)
(72) Inventeur: Vilard, Philippe, Société Civile S.P.I.D., 75008 Paris (FR); Bogaert, Marnik, Société Civile S.P.I.D., 75008 Paris (FR)
(74) Mandataire: Chaffraix, Jean

(57) **Abrégé**

Un appareil affiche un signal vidéo (VID) au moyen d'un balayage (SCAN). L'appareil peut être, par exemple, un téléviseur. L'appareil comprend un dispositif (SCAVEM) pour moduler la vitesse du balayage (Vscan) en fonction d'une dérivée (DLUM) d'un signal de luminance (LUM) extrait du signal vidéo (VID). Ceci permet d'améliorer la qualité subjective de l'affichage. L'appareil comprend la caractéristique suivante afin d'obtenir une qualité encore meilleure, notamment quand l'appareil est utilisé pour afficher des signaux de vidéo de différents types. La dérivée (DLUM) du signal de luminance, en fonction de laquelle la vitesse du balayage (Vscan) est modulée, est obtenue au moyen d'un circuit différentiateur (DIFF) ayant une caractéristique de fréquence réglable (CFR).

## Description

### DOMAINE TECHNIQUE

L'invention concerne l'affichage d'un signal vidéo au moyen d'un balayage en lignes. L'invention peut-être appliquée dans, par exemple, un téléviseur muni d'un tube cathodique.

### ETAT DE LA TECHNIQUE ANTERIEURE

La technique suivante permet d'améliorer la qualité subjective de l'affichage. On module la vitesse du balayage en fonction de la dérivée d'un signal luminance extrait du signal vidéo à afficher. La dérivée sera importante en cas d'une transition dans le signal luminance. Une transition représente un changement abrupt de luminosité. Ceci correspond généralement à un contour d'un objet faisant partie de l'image affichée. Par conséquent, la vitesse du balayage changera relativement considérablement auprès d'un contour. Ceci donne une apparence plus nette au contour ce qui contribue à la qualité subjective de l'image.

Un dispositif pour moduler la vitesse du balayage comprend typiquement un circuit différentiateur. Le circuit différentiateur sert à fournir la dérivée du signal luminance en fonction de laquelle on module la vitesse du balayage. Le circuit dérivateur peut, par exemple, comprendre une capacité étant disposée comme suit. Une borne de la capacité reçoit trois composants de couleur du signal vidéo, rouge, vert et bleue, à travers des résistances respectives. Ainsi, cette borne reçoit un mélange des composants de couleur qui constitue un signal de luminance. L'autre borne de la capacité est reliée à une entrée d'un étage de transistor. Ainsi, l'étage de transistor fournit la dérivée du signal luminance. Un tel dispositif semble être divulgué dans la demande de brevet européen publie sous le numéro 0 723 365 (numéro de dossier du mandataire: PHF 95.601).

### EXPOSE DE L'INVENTION

Un but de l'invention est de permettre une qualité subjective de l'affichage encore meilleure.

Selon l'invention, la dérivée du signal de luminance, en fonction de laquelle la vitesse du balayage est modulée, est obtenue au moyen d'un circuit différentiateur ayant une caractéristique de fréquence réglable.

L'invention prend les aspects suivants en considération. Un circuit différentiateur a une caractéristique de fréquence qui elle-même est caractérisée par un doublage de gain par octave. Si la caractéristique de fréquence est représenté par un diagramme logarithmique, ce diagramme sera caractérisé par une pente positive de +6 décibels par octave. Pour un circuit différentiateur idéal, cette pente positive débutera à la fréquence "zéro" et continuera jusqu'à la fréquence "infinie". Pour un circuit différentiateur pratique cette pente positive débutera généralement à la fréquence zéro mais s'arrêtera à une certaine fréquence. Elle sera suivie par une pente négative représentant une diminution de gain pour une augmentation de fréquence. Par conséquent, un circuit différentiateur pratique un maximum de gain à une certaine fréquence. Cette fréquence sera dénommée fréquence de pointe dans la suite.

La fréquence de pointe du circuit différentiateur influence la qualité subjective de l'affichage. Supposons que la fréquence de pointe est sensiblement supérieure à la fréquence de coupure du signal de luminance. Dans ce cas, le circuit différentiateur amplifiera relativement beaucoup les composants de signaux au-delà de la fréquence de coupure du signal de luminance. Ces composants de signaux représentent du bruit. Par conséquent, la dérivée du signal de luminance sera relativement bruyante. Comme la vitesse du balayage est modulée en fonction de cette dérivée, cette modulation sera peu précise et plutôt au hasard. Ceci affectera la qualité de l'affichage. Il est même possible que la qualité de l'affichage soit moins bonne par rapport à un affichage sans modulation de la vitesse du balayage.

Supposons maintenant que la fréquence de pointe est sensiblement inférieure à la fréquence de coupure du signal de luminance. Dans ce cas, les composants du signal vidéo proches de la fréquence de coupure contribueront relativement peu à la modulation de la vitesse. Mais se sont ces composants qui définissent sensiblement les contours dans l'image à afficher. Donc, la modulation de la vitesse du balayage n'accentuera que peu les contours. Plus grave, la modulation sera sensiblement déterminée par des composants associés à des variations de luminance plutôt graduelle. Ceci peut donner lieu à des effets peu naturel dans l'affichage.

En principe, il est possible de concevoir un circuit différentiateur qui permet à la modulation de la vitesse du balayage de produire un résultat satisfaisant. Un tel circuit différentiateur aura une caractéristique de fréquence dans laquelle la fréquence de pointe sera assez proche de la fréquence de coupure du signal de luminance.

Toutefois, le problème suivant se pose si on désire afficher des différents signaux de vidéo. La fréquence de coupure d'un signal vidéo peut être différente de la fréquence de coupure d'un autre signal vidéo. Par exemple, la fréquence de coupure d'un signal de télévision classique est d'environ 5 MHz. La fréquence de coupure d'un signal de télévision à haute définition est plus élevée, par exemple, 8 MHz. Par contre, la fréquence de coupure d'un signal vidéo provenant d'un magnétoscope ordinaire est relativement basse, typiquement 3 MHz. Un dispositif pour afficher ces différents types de signaux vidéo peut être muni d'un circuit différentiateur ayant une fréquence pointe de 5 MHz. En effet, ceci est un compromis. En cas d'un affichage d'un signal de télévision classique, la modulation de la vitesse du balayage produira un résultat assez proche de l'optimal. En cas d'un affichage d'un signal de télévision à haute définition le résultat peut-être acceptable. Néanmoins, résultat sera relativement éloigné de l'optimal pour des raisons décrites précédemment. Le même est vrai dans le cas d'un signal vidéo provenant d'un magnétoscope ordinaire.

Il a déjà été dit que, selon l'invention, la dérivée du signal de luminance, en fonction de laquelle la vitesse du balayage est modulée, est obtenue au moyen d'un circuit différentiateur ayant une caractéristique de fréquence réglable.

Donc, l'invention permet un réglage de la caractéristique de fréquence du circuit différentiateur. Par conséquent, l'invention permet de déplacer la fréquence de pointe du circuit différentiateur en cas d'un changement de type de signal de vidéo. Ainsi, pour des signaux de vidéo de différents types on peut bien positionner la fréquence de pointe du circuit différentiateur par rapport à la fréquence de coupure du signal de luminance. De cette façon, la dérivée du signal de luminance sera relativement peu bruyante et, en même temps, les composants associées aux contours contribueront sensiblement à la dérivée. Par conséquent, la vitesse du balayage sera modulée d'une façon relativement précise et la modulation s'effectuera surtout auprès des contours. Par conséquent, l'invention permet une qualité subjective de l'affichage encore meilleure.

Ces et autres aspects de l'invention seront décrits plus en détail par référence à des figures.

### BREVE DESCRIPTION DES FIGURES

La Figure 1 est un diagramme conceptuel illustrant des caractéristiques de base décrites précédemment;
Les Figures 2, 3 sont des diagrammes conceptuels illustrant des caractéristiques additionnelles;
La Figure 4 est un diagramme de bloc illustrant un téléviseur comprenant un circuit pour moduler la vitesse d'un balayage dans le processus d'affichage;
La Figure 5 est un diagramme illustrant le circuit pour moduler la vitesse du balayage.

### MODES DE REALISATION DE L'INVENTION

Les remarques suivantes concernent les signes de référence. Des entités similaires sont désignées par une référence par lettres identique dans toutes les figures. Plusieurs entités similaires peuvent apparaître dans une seule figure. Dans ce cas, un chiffre ou un suffixe est ajouté à la référence par lettres afin de distinguer entre des entités similaires. Le chiffre ou le suffixe peut être omis pour des raisons de convenance. Ceci s'applique pour la description ainsi que pour les revendications.

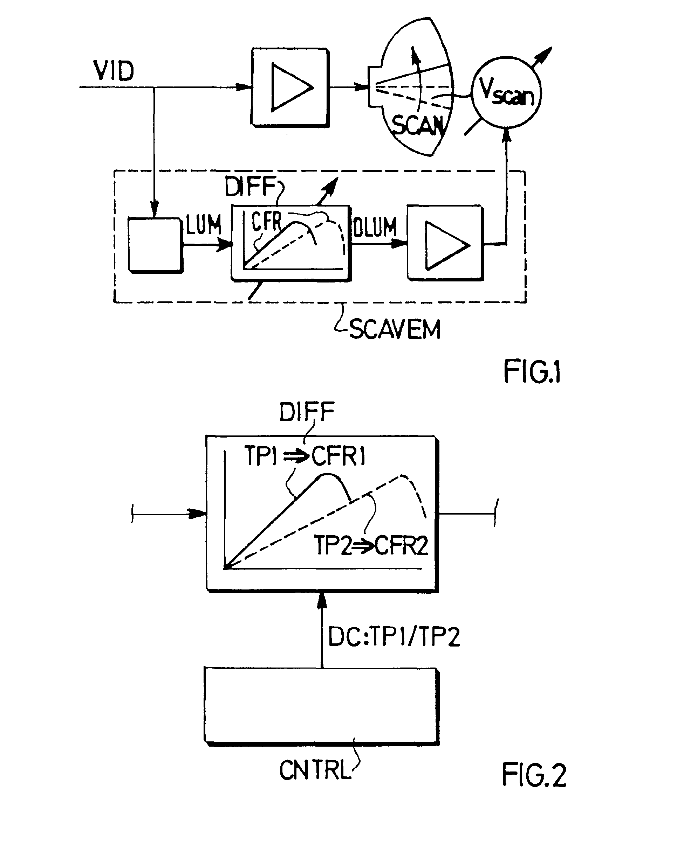

La Figure 1 illustre des caractéristiques de base décrites précédemment. Un appareil affiche un signal vidéo (VID) au moyen d'un balayage (SCAN). L'appareil comprend un dispositif (SCAVEM) pour moduler la vitesse du balayage (Vscan) en fonction d'une dérivée (DLUM) d'un signal de luminance (LUM) extrait du signal vidéo (VID). La dérivée (DLUM) du signal de luminance, en fonction de laquelle la vitesse du balayage (Vscan) est modulée, est obtenue au moyen d'un circuit différentiateur (DIFF) ayant une caractéristique de fréquence réglable (CFR).

A l'égard des caractéristiques illustrées dans la Figure 1 les aspects suivants ont été pris en considération. Il est possible de munir l'appareil illustré dans la Figure 1 d'un bouton de commande pour ajuster la caractéristique de fréquence du circuit différentiateur. Ainsi, un utilisateur pourrait varier cette caractéristique jusqu'à lui ait trouvé un ajustement pour lequel la qualité de l'affichage lui parait optimale. Cette solution permet donc un ajustement personnalisé. Toutefois, elle nécessite une intervention supplémentaire de l'utilisateur. La plupart des utilisateurs considèrent que les appareils électriques sont déjà assez compliqués à employer.

La Figure 2 illustre des caractéristiques additionnelles par rapport à la Figure 1. L'appareil comprend un dispositif de contrôle (CNTRL) pour fournir un signal de contrôle (DC) indiquant le type (TP) de signal vidéo. Le circuit différentiateur (DIFF) est disposé pour faire varier sa caractéristique de fréquence (CFR) en fonction du signal de contrôle (DC).

Les caractéristiques additionnelles illustrées dans la Figure 2 permettent donc un ajustement automatique de la caractéristique de fréquence du circuit différentiateur. Ceci contribue à la facilité d'emploi de l'appareil concernée. Par conséquent, les caractéristiques additionnelles illustrées dans la Figure 2 permettent une meilleure satisfaction à l'utilisateur.

A l'égard des caractéristiques additionnelles illustrées dans la Figure 2 on remarque encore ce qui suit. Un signal de contrôle indiquant le type de signal vidéo peut être obtenu d'une façon relativement peu coûteuse. La plupart des téléviseurs modernes comprennent un microprocesseur. Ce microprocesseur intervient généralement dans la sélection d'une source de vidéo, par exemple, un tuner, un magnétoscope, un boite de décodage (en anglais: settop box). En outre, le microprocesseur peut intervenir dans un éventuel paramétrage du traitement du signal vidéo. Grâce à ces interventions, le microprocesseur connaît, en effet, le type de signal vidéo. Il est donc relativement facile de lui faire fournir un signal de contrôle indiquant le type de signal vidéo. Il est également facile de déduire un tel signal à partir des signaux de contrôle pour la sélection de la source et pour le paramétrage du traitement.

A l'égard des caractéristiques illustrées dans la Figure 1 les aspects suivants ont également été pris en considération. Un aspect important d'un ajustement de la caractéristique de fréquence, est le déplacement de la fréquence à laquelle le gain du circuit différentiateur est maximal. Cette fréquence a déjà été dénommée fréquence de pointe dans la partie "exposée de l'invention". Il y a de nombreuses manières pour implémenter un circuit différentiateur ayant une fréquence de pointe déplaçable. Par exemple, le circuit différentiateur peut comprendre un ensemble d'impédances ajustables. Toutefois, un tel circuit sera relativement compliqué ou l'ajustement d'un tel circuit sera également relativement compliqué ou même les deux pourront être compliqués.

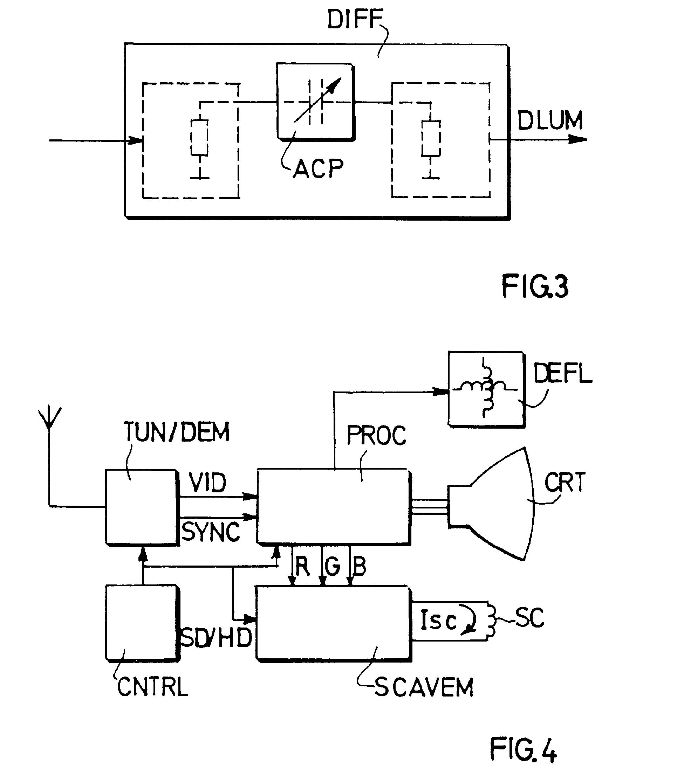

La Figure 3 illustre les caractéristiques additionnelles par rapport à la Figure 1. Le circuit différentiateur (DIFF) comprend une voie capacitive ajustable (ACP) au moyen de laquelle la dérivée (DLUM) du signal de luminance est principalement obtenue. Il va sans le dire que la voie capacitive ajustable (ACP) constitue une capacité entre les deux extrémités de cette voie, la capacité étant donc ajustable.

La fréquence de pointe est sensiblement déterminée par une constante de temps (en anglais: time constant) formée par la capacité de la voie capacitive et l'impédance à chaque extrémité de cette voie: une impédance de source et une impédance de charge. Par conséquent, un ajustement de la voie capacitive déplacera la fréquence de pointe. Il est relativement facile d'implémenter une voie capacitive ajustable et également relativement facile d'ajuster une telle voie. Par conséquent, les caractéristiques illustrées dans la Figure 3 permettent une implémentation à faible coût.

Un autre avantage des caractéristiques additionnelles illustrées dans la Figure 3 est lié aux aspects suivants. Il est souhaitable que la fréquence de pointe soit relativement élevée pour un signal vidéo à haute définition et qu'elle soit basse pour un signal à moyenne définition. Ceci a déjà été expliqué précédemment dans la partie "exposée de l'invention".

Un signal à haute définition représente les contours d'une façon précise tandis qu'un signal à moyenne définition représente les contours d'une façon moins précise. De ce fait, il est souhaitable que la modulation de la vitesse du balayage soit relativement faible pour un signal de vidéo à haute définition et qu'elle soit relativement forte pour un signal de vidéo à moyenne définition. L'étendue de la modulation de la vitesse du balayage dépend entre autre de la constante différentiateur du circuit différentiateur. Cette constante détermine le gain à une certaine fréquence donnée dans le spectre du signal vidéo. Plus faible est ce gain, plus faible est la modulation de la vitesse du balayage.

Donc, en résument, pour un signal vidéo à haute définition il est souhaitable que la fréquence de pointe soit élevée et que la constante différentiateur soit faible. Par contre, pour un signal vidéo à moyenne définition il est souhaitable que la fréquence de pointe soit basse et que la constante différentiateur soit forte.

Faisant référence à la Figure 3, une diminution de la capacité de la voie capacitive ajustable (ACP) augmentera la fréquence de pointe et, en même temps, diminuera la constante différentiateur. Inversement, une augmentation de la capacité de la voie capacitive ajustable (ACP) diminuera la fréquence de pointe et, en même temps, augmentera la constante différentiateur. Par conséquent, les caractéristiques illustrées dans la Figure 3 permettent une implémentation simple pour l'affichage de signaux de vidéo de différents types à qualité convenable.

Les caractéristiques illustrées dans les Figures 1-3 peuvent être appliquées dans, par exemple, dans un téléviseur. La plupart des téléviseurs emploient un tube cathodique pour l'affichage d'un signal vidéo. Le tube cathodique comprend une cathode qui génère un ou plusieurs faisceaux d'électrons dont l'intensité varie en fonction du signal vidéo. Le faisceau d'électrons fait impacte sur un écran phosphorique à un certain endroit. L'endroit de l'impacte dépend des conditions magnétiques. Celles-ci sont variées au moyen de signaux de déflections appliqués à un système de bobines, de telle sorte que le faisceau d'électrons balaye l'écran phosphorique en lignes.

Fig. 4 illustre un téléviseur. Le téléviseur comprend un dispositif d'accordement et démodulation (TUN/DEM), un processeur vidéo(PROC), un tube cathodique (CRT), un système de bobines de déflection (DEFL), un contrôleur (CNTRL), un circuit pour moduler la vitesse du balayage (SCAVEM) et une bobine supplémentaire de déflection (SC).

Le téléviseur fonctionne globalement comme suit. Le dispositif d'accordement reçoit un signal de transmission télé (RF) et en déduit un signal de vidéo (VID) et des signaux de synchronisation (SYNC). Le processeur vidéo (PROC) traite ces différents signaux afin d'appliquer des signaux de cathode au tube cathodique (CRT) et des signaux de déflection au système de bobines de déflection (DEFL). En outre, le processeur vidéo (PROC) applique un signal rouge (R), vert (G) et bleue (B) au circuit pour moduler la vitesse du balayage (SCAVEM). Le contrôleur (CNTRL) applique des signaux de contrôle à différentes entités fonctionnelles du téléviseur. En autre, il applique un signal de contrôle (SD/HD) au dispositif pour moduler la vitesse du balayage (SCAVEM). Ce signal indique si le signal de transmission télé (RF) est à haute définition ou à moyenne définition.

Le circuit pour moduler la vitesse du balayage (SCAVEM) combine le signal rouge (R), vert (G) et bleue (B) afin d'obtenir un signal de luminance. Il applique un courant de modulation (Isc) à la bobine supplémentaire de déflection (SC) en réponse des transitions dans ce signal de luminance. Ceci a pour effet que la vitesse du balayage change auprès des contours dans l'image affichée.

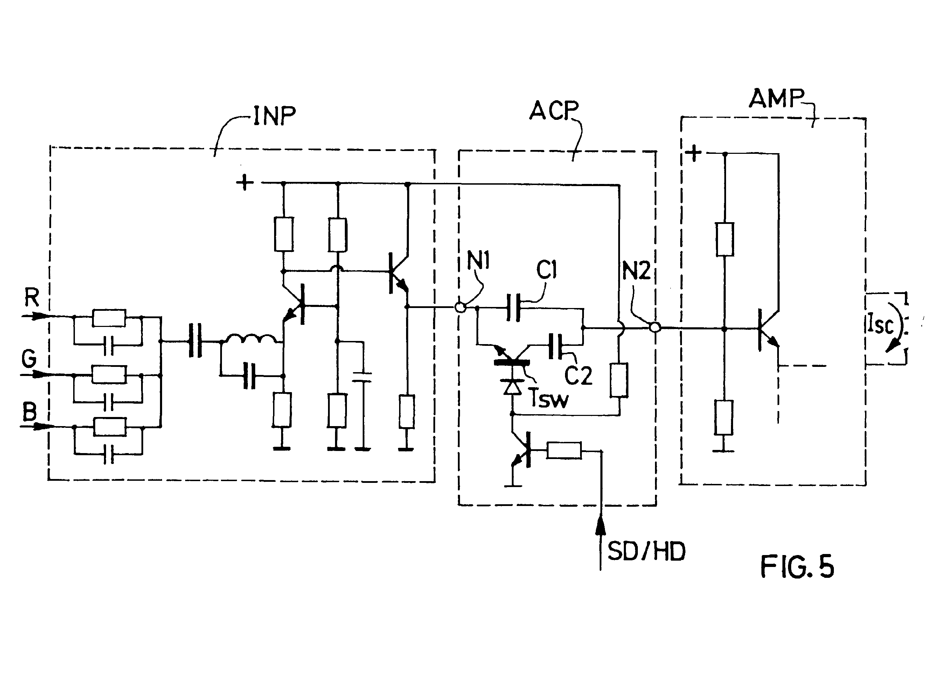

Fig. 5 illustre le circuit pour moduler la vitesse du balayage (SCAVEM) plus en détail. Le circuit comprend une entrée (INP), une voie capacitive ajustable (ACP) et un amplificateur de sortie (AMP). La voie capacitive ajustable (ACP) comprend une capacité principale (C1), une capacité supplémentaire (C2) et un transistor de commutation (Tsw). Ces éléments sont reliés entre une borne d'entrée (N1) et une borne de sortie (N2). Une certaine capacité sera présente entre ces bornes (N1,N2). Cette capacité sera dénommée capacité différentiateur dans la suite.

La voie capacitive ajustable (ACP) et l'impédance d'entrée de l'amplificateur de sortie (AMP) constituent un diviseur de tension différentiateur. La constante de différentiation dépend, en autre, de la capacité différentiateur associée à la voie capacitive ajustable (ACP). La fréquence à laquelle le gain du circuit pour moduler la vitesse du balayage (SCAVEM) sera maximal, la fréquence de pointe, dépend également de la capacité différentiateur.

Le circuit pour moduler la vitesse du balayage (SCAVEM) fonctionne comme suit. L'entrée (INP) combine le signal rouge (R), vert (G) et bleue (B). Ainsi, le signal de luminance sera présent sur la borne d'entrée (N1) de la voie capacitive ajustable (ACP). Ce signal de luminance est appliqué au diviseur de tension différentiateur formé par la voie capacitive ajustable (ACP) et l'impédance d'entrée de l'amplificateur de sortie (AMP). Par conséquent, une dérivée du signal de luminance sera présente sur la borne de sortie (N2) de la voie capacitive (ACP). L'amplificateur de sortie (AMP) amplifie cette dérivée du signal de luminance et t'applique à la bobine de déflection supplémentaire (SC) sous forme d'un courant (Isc).

Le signal de contrôle (SD/HD) est une tension relativement basse en cas d'un signal vidéo à moyenne définition. Dans ce cas, le transistor de commutation (Tsw) sera conducteur, il formera en effet un court circuit. Par conséquent, la capacité différentiateur sera sensiblement égale à la somme de la capacité principale (C1) et la capacité supplémentaire (C2). La constante différentiateur sera relativement importante et la fréquence de pointe sera relativement basse.

Par contre, le signal de contrôle (SD/HD) est une tension relativement élevée en cas d'un signal vidéo à haute définition. Dans ce cas, le transistor de commutation (Tsw) sera non-conducteur, il formera en effet un circuit ouvert. Par conséquent, la capacité différentiateur sera sensiblement égale à la capacité principale (C1). La constante différentiateur sera relativement faible et la fréquence de pointe sera relativement élevée.

La description ci-dessus par référence aux Figures illustre l'invention plutôt que la limite. Il est évident qu'il existe de nombreuses alternatives qui rentrent dans la portée des revendications ci-jointes. A cet égard quelques remarques sont faites en conclusion.

Il existe de nombreuses manières pour implémenter un circuit différentiateur ayant une caractéristique de fréquence réglable. La Figure 5 illustre seulement une implémentation possible dans laquelle une capacité supplémentaire est commutée en parallèle avec une capacité principale ou non en fonction d'un signal de commande. Il sera également possible, par exemple, d'appliquer une capacité ajustable en fonction d'une tension continue. Une autre implémentation pourrait comprendre plusieurs capacités supplémentaires commutables. Ceci est une autre manière de sélectionner une parmi plusieurs caractéristiques de fréquence possible. Ainsi la modulation de la vitesse du balayage pourrait être optimisée pour plusieurs types de signaux vidéo: signal vidéo d'un magnétoscope, signal vidéo d'un lecteur de disque optique, signal vidéo d'une transmission analogique, signal vidéo d'une transmission numérique, etc..

Il existe de nombreuses manières pour implémenter des fonctions au moyen d'articles physiques (en anglais: items of hardware) ou de logiciel (en anglais: software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Aucun signe de référence entre parenthèses dans une revendication ne doit être interprété de façon limitative. Le mot "comprenant" n'exclut pas la présence d'autres éléments ou étapes listées dans une revendication. Le mot "un" ou "une" précédant un élément ou une étape n'exclut pas la présence d'une pluralité de ces éléments ou ces étapes.

## Revendications

1. Appareil pour afficher un signal vidéo (VID) au moyen d'un balayage (SCAN), l'appareil comprenant:
- un dispositif (SCAVEM) pour moduler la vitesse du balayage (Vscan) en fonction d'une dérivée (DLUM) d'un signal de luminance (LUM) extrait du signal vidéo (VID);
**caractérisé en ce que** l'appareil comprend:
- un circuit différentiateur (DIFF) ayant une caractéristique de fréquence réglable (CFR) pour obtenir la dérivée (DLUM) du signal de luminance en fonction de laquelle la vitesse du balayage (Vscan) est modulée.

2. Appareil selon la revendication 1, **caractérisé en ce que**:
- l'appareil comprend un dispositif de contrôle (CNTRL) pour fournir un signal de contrôle (DC) indiquant le type (TP) de signal vidéo, et en ce que
- le circuit différentiateur (DIFF) est disposé pour faire varier sa caractéristique de fréquence (CFR) en fonction du signal de contrôle (DC).

3. Appareil selon la revendication 1, **caractérisé en ce que**:
- le circuit différentiateur (DIFF) comprend une voie capacitive ajustable (ACP) au moyen de laquelle la dérivée (DLUM) du signal de luminance est principalement obtenue

4. Méthode pour afficher un signal vidéo au moyen d'un balayage, la méthode comprenant les étapes suivantes:
- moduler la vitesse du balayage en fonction de la dérivée du signal vidéo;
**caractérisé en ce que** la méthode comprend l'étape suivante:
- fournir la dérivée du signal vidéo à partir du signal vidéo au moyen d'un circuit ayant une caractéristique de fréquence réglable.
